# EUROPEAN PATENT SPECIFICATION

(11) **EP 4 502 550 B1**
(45) Date of publication and mention of the grant of the patent: **07.10.2026**
(21) Application number: 23382809.4
(22) Date of filing: 02.08.2023
(51) Int. Cl.: F16K 37/00, G01F 1/66, G01F 23/00, G01F 23/296, G01F 15/00

(54) **FLUID EQUIPMENT STATE DETERMINATION**
BESTIMMUNG DES ZUSTANDS EINER FLÜSSIGKEITSAPPARATUR
DÉTERMINATION D'ÉTAT D'ÉQUIPEMENT DE FLUIDE

(43) Date of publication of application: 05.02.2025
(73) Proprietor: EQUIPTANK ENGINEERING, S.L., 25320 Anglesola (ES)
(72) Inventor: SOLÉ DE AGUIAR, Xavier, 25320 Anglesola (ES); SOLÉ DE AGUIAR, Juan Leandro, 25320 Anglesola (ES); ESCUDERO I COSTA, Francesc, 25320 Anglesola (ES)
(74) Representative: ZBM Patents - Zea, Barlocci & Markvardsen

(56) References cited:
- EP-A1- 3 662 945
- WO-A1-2024/011124
- US-A1- 2005 011 278
- US-A1- 2017 080 445
- US-A1- 2022 299 354
- US-B2- 8 816 866
- WILLIS TRACY L ET AL: "Maintaining a successful Valve and Trap Leak Detection Program Using The ValveAlyzer System", 9 November 1998 (1998-11-09), pages 1 - 34, XP002525111, Retrieved from the Internet <URL:http://www.leakdetect.com/files/Indiana.pdf> [retrieved on 19981112]

## Description

The present disclosure relates to systems for determining a state of a fluid equipment comprising a tank in fluid communication with a pipe and a valve, and methods for determining a state of the fluid equipment.

### BACKGROUND

Fluids such as liquids can be stored in tanks or reservoirs from where they can be distributed through a pipe associated with the tank. The liquid may leave the pipe to end up in a drain or other tank.

To adjust the flow of liquid through the pipe, one or more valves may be installed in the pipe. In some cases, a bottom valve may be installed in the connecting region between the tank and the pipe. A discharging valve may also be installed downstream the bottom valve.

To know the state of the valves and, eventually, to detect the presence of liquid, motion sensors (magnetic or inductive) and liquid detectors can be installed. Intrusive intervention may be required, leading to significant installation difficulties.

US2005011278A1 discloses a diagnostic device for use in a industrial process includes monitoring electronics or diagnostic circuitry configured to diagnose or identify a condition or other occurrence in the industrial process. The system can be implemented in a process device such as a flowmeter, and in one example an acoustic flowmeter. A transducer can also be used and a frequency response, such as resonant frequency, can be observed.

The present disclosure provides examples of systems and methods that at least partially resolve some of the aforementioned disadvantages.

### SUMMARY

In a first aspect, a system for determining a state of a fluid equipment comprising a tank in fluid communication with a pipe and a valve, is disclosed. The system comprises a controller configured to receive an acoustic signature of the fluid equipment; and receive tank fill level data. The controller is further configured to process the acoustic signature and the tank fill level data using an algorithm configured to produce an output related to a valve position state. The valve position state is determined by verifying whether the output of the algorithm satisfies a predetermined probability threshold.

According to this aspect, a state of the fluid equipment may be determined by the controller based on the output of the algorithm.

Furthermore, the accuracy and consistency of the controlling of the fluid equipment may be enhanced by feeding the algorithm with the acoustic signature and the tank fill level data. The number of wrongly determined states may be reduced or even avoided.

The state of the fluid equipment may be determined regardless of the number of valves, type of fluid, and/or volume of fluid stored inside the tank.

In a further aspect, a method for determining a state of a fluid equipment comprising a tank in fluid communication with a pipe and a valve, is disclosed. The method comprises receiving, by a controller, an acoustic signature of the fluid equipment; and receiving, by the controller, tank fill level data. The method further comprises processing, by the controller, the acoustic signature, and the tank fill level data using an algorithm configured to produce an output related to a valve position state, and determining the valve position state by verifying whether the output of the algorithm satisfies a predetermined probability threshold.

Advantages derived from these aspects may be similar to those mentioned regarding the first aspect.

In the present disclosure, the expression "state of the fluid equipment" may be related to, at least, a valve position state. The state may refer to the condition of a part or equipment.

In the present disclosure, the expression "acoustic signal" may comprise a sound signal or signals. The sound signal may comprise a wave.

In the present disclosure, the expression "acoustic signature" may comprise a sound signal or signals from the fluid equipment. The "acoustic signature" may comprise an equipment signal. The acoustic signature may be produced by applying an acoustic signal to the fluid equipment or without applying the acoustic signal.

### BRIEF DESCRIPTION OF THE DRAWINGS

Non-limiting examples of the present disclosure will be described in the following, with reference to the appended drawings, in which:
Figure 1 schematically illustrates a system with a controller according to an example of the present disclosure;
Figure 2 schematically illustrates a view of a system according to one example of the present disclosure;
Figure 3 schematically illustrates a view of the system of Figure 2 along with a fluid equipment according to one example;
Figure 4 schematically illustrates a view of a system in a tank vehicle according to one example of the present disclosure;
Figure 5 schematically illustrates a view of a system according to one example of the present disclosure;
Figure 6 is a flow chart schematically illustrating a neural network according to an example of the present disclosure;
Figure 7 is a flow chart schematically illustrating a computer-implemented method according to an example of the present disclosure; and
Figure 8 is a flow chart schematically illustrating a computer-implemented method according to an example of the present disclosure.

### DETAILED DESCRIPTION OF EXAMPLES

In these Figures, the same reference signs have been used to designate matching elements.

The examples of methods disclosed herein are not constrained to a particular order.

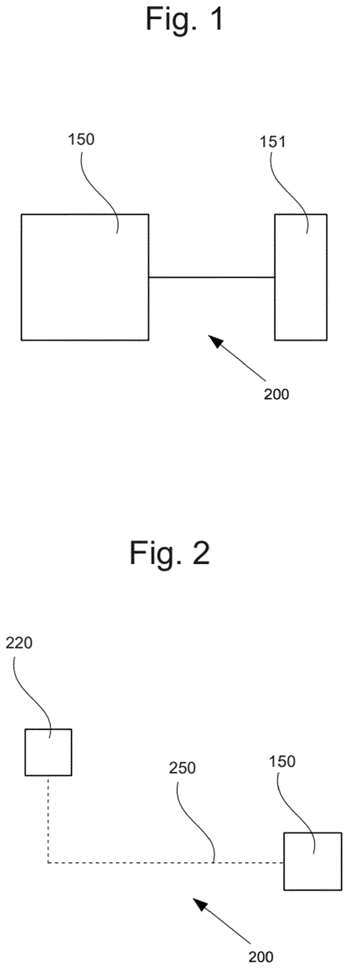

Figure 1 schematically illustrates a system 200 with a controller 150 according to an example of the present disclosure. The system 200 is configured to determine a state of a fluid equipment. The system 200 may be configured to perform a method for determining a state of the fluid equipment according to any example herein disclosed.

In the illustrated example, system 200 comprises the controller 150 and a non-transitory machine-readable storage medium 151. The controller 150 may perform a method for determining a state of the fluid equipment according to any example disclosed herein. In some examples, the controller 150 may perform a method for determining a state of a valve of a fluid equipment.

The controller 150 may be a processor, a chip, a computational device, or processing resources that executes sequences of machine-readable instructions contained in a memory. The controller 150 performs operations on data. The memory may be a non-transitory machine-readable storage medium 151. As can be seen in Figure 1, the non-transitory machine-readable storage medium 151 is coupled to the controller 150. Examples of a non-transitory machine-readable storage medium may include a memory device, a floppy disk, a compact disk (CD), a digital versatile disk (DVD), a USB drive, a computer memory, a read-only memory, or other devices that may store computer code.

The machine-readable instructions may comprise a computer program(s) in the form of source code, object code, a code intermediate source, and object code such as in partially compiled form, or in any other form suitable for use in implementing the methods according to the present disclosure.

The fluid equipment comprises a tank in fluid communication with a pipe and a valve.

The system 200 comprises the controller 150 which is configured to:
- receive an acoustic signature of the fluid equipment. The acoustic signature may refer to a response from the fluid equipment, i.e., a response signature. The response may be obtained after transmitting an acoustic signal to the fluid equipment and/or without transmitting the acoustic signal, e.g., response produced by the sole operation of the fluid equipment. The response may comprise values of measured signal or signals (for instance in the form of a wave) over the time and/or frequency values as obtained from the measured signals, e.g., by applying a Fourier transform to the measured signals such as Discrete Fourier Transform (DFT). The acoustic signature may comprise a profile or pattern, for instance, comprising amplitude or frequency profiles. Details about the acoustic signal and the acoustic signature are provided herein;
- receive tank fill level data. The tank fill level data may refer to the filling state or condition of the tank, for instance, full, empty, and/or any intermediate state between full and empty. In some examples, the tank fill level data may refer to the presence or absence of fluid inside the tank. The use of tank fill level data may allow to increase accuracy in determining state of the fluid equipment; and
- process the acoustic signature and the tank fill level data using an algorithm configured to produce an output related to a valve position state. The valve position state may comprise open, closed, and/or any intermediate state between fully open and fully closed. The intermediate state may be expressed as a percentage or the like, and determine the valve position state by verifying whether the output of the algorithm satisfies a predetermined probability threshold.

The controller may be configured to determine the state of the fluid equipment based on the output of the algorithm.

The controller 105 may be remotely installed from the fluid equipment. Data such as the acoustic signature and/or the tank fill level data may be collected in a location different from the location of the controller 150. For instance, the fluid equipment may be installed in a tank vehicle, a petrol station, or a dedicated facility, and the controller 150 may be located in a remote office or the like to process received data. In examples, data collected from the fluid equipment may be stored during a period of time and provided to the algorithm, for instance, at the time when the state of the fluid equipment has to be determined.

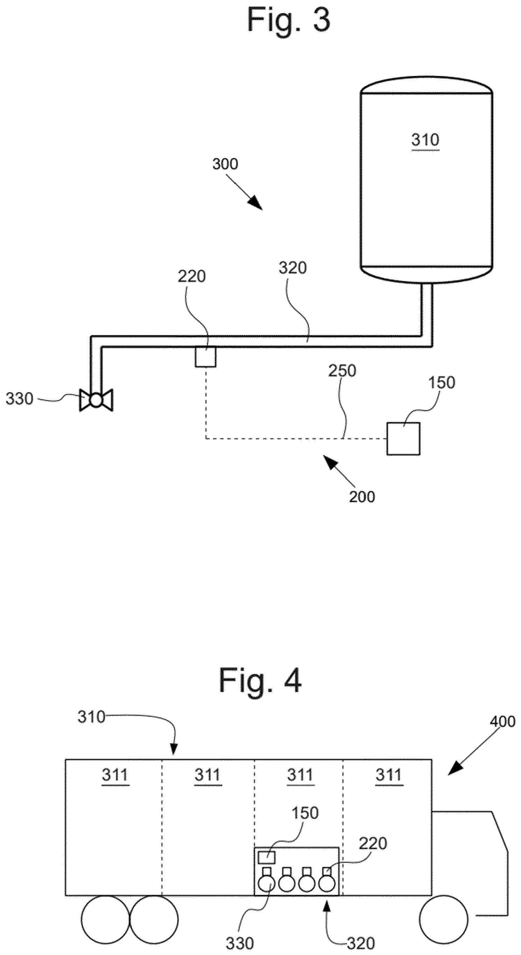

Figure 2 schematically illustrates a view of a system 200 according to one example of the present disclosure. Figure 3 schematically illustrates a view of the system 200 of Figure 2 along with a fluid equipment 300 according to one example. Figures 2 and 3 may be related to the case in which the controller 150 is installed in the same location as the monitored fluid equipment. System 200 may be removably or releasably attached to the fluid equipment 300. As mentioned above, fluid equipment 300 comprises a tank 310, a pipe 320, and a valve 330. The fluid equipment 300 may be configured to handle a fluid such as liquid or gas.

As can be seen in the example of Figure 2, system 200 comprises an acoustic transducer 220 to be acoustically coupled to the fluid equipment. The acoustic transducer 220 may be removably or releasably arranged on an external surface or outside of the pipe, valve, or tank. This way, intrusive intervention inside the fluid equipment may be avoided or at least reduced.

The acoustic transducer 220 may convert electrical energy into acoustic energy. In an example, the acoustic transducer 220 may be an ultrasonic transducer and the acoustic energy may be an ultrasound electric signature.

The acoustic transducer may be configured to transmit the acoustic signal to the fluid equipment and to collect the acoustic signature of the fluid equipment. In an example, the acoustic transducer may be configured to collect the acoustic signature of the fluid equipment which may be produced when a fluid flows through the fluid equipment.

The acoustic transducer 220 may be in data communication 250 with the controller 150. Thus, the acoustic transducer 220 may be configured to provide the acoustic signature to the controller.

In an example, the controller 150 may be configured to determine the presence or absence of fluid within the pipe from the output of the algorithm. Determining the state of the fluid equipment may include determining the presence or absence of fluid inside the pipe 320 from the output of the algorithm. Thus, the output of the algorithm may be related to the presence or absence of fluid. The acoustic signature of the fluid equipment may vary depending on the presence and/or absence of the fluid within pipe 320 and/or within tank 310. In this example, the controller 150 may be configured to determine at least one of the following states of the fluid equipment:
▪ absence of fluid inside the pipe, open valve;
▪ absence of fluid inside the pipe, closed valve;
▪ presence of fluid inside the pipe, open valve;
▪ presence of fluid inside the pipe, closed valve;

In some examples, controller 150 may be configured to determine the kind or type of fluid from the output of the algorithm. The kind of fluid may be determined based on the density of the fluid. Particular density values may be related to the kinds of fluids. The density may be retrieved from the acoustic signature. The received acoustic signature may be compared with reference acoustic signatures labelled with a corresponding kind of fluid.

The fluid may be liquid or gas. By way of a non-limiting example, the fluid may comprise water, oil, or any fluid hydrocarbon.

According to some examples, controller 150 may be configured to command the acoustic transducer 220 such that the acoustic signal comprises a predetermined frequency value, e.g. a predetermined transmitting frequency value. The acoustic signal may comprise a wave with a predetermined frequency value. The predetermined frequency value may be chosen depending on the case. By way of a non-limiting example, the predetermined frequency may be 40 kHz.

The acoustic transducer 220 may emit or send the acoustic signal which is applied to the fluid equipment 300. The acoustic signal may comprise a pulse or a plurality of pulses, for instance, 10 pulses. The duration and/or amplitude of the pulse may vary. By way of example, the duration of the pulse may be 25 µs and the amplitude of the wave may be 25 V.

The acoustic signature may be generated by the fluid equipment as a reaction to the applied acoustic signal. Thus, the acoustic signature may depend on the state of the fluid equipment. If a condition of the fluid equipment varies, then the acoustic signature may vary as well. A particular acoustic signature may be related to a corresponding state of the fluid equipment.

As above mentioned, the acoustic signal may comprise a wave or an impulse and the acoustic signature may comprise an impulse response of the fluid equipment. The impulse response may describe the reaction of the fluid equipment as a function of time, e.g., in the time domain. The reaction may be expressed as a response function, and a transform may be applied to the response function. The outcome of the transformed response function may be expressed in the frequency domain.

The algorithm may be fed with the acoustic signature in time domain and/or in frequency domain.

The acoustic signal in time domain may be a discrete-time signal. The duration of the discrete-time signal may vary depending on the case.

In an example, controller 150 is configured to determine the valve position state by verifying whether the output of the algorithm satisfies a predetermined probability threshold. Controller 150 may be configured to check or verify whether a probability value associated with an output of the algorithm satisfies the predetermined probability threshold. The predetermined probability threshold may be chosen depending on the case. In an example, the predetermined probability threshold may be 50%, this may mean that if the output or outcome of the algorithm is equal to or greater than 50% a related valve position state may be determined.

In some examples, the output may comprise the result that has the highest probability value. Then, the state of the fluid equipment may be determined based on the output having the highest probability value.

In some examples, the controller 150 may compare the acoustic signal in time domain or in frequency domain with a reference acoustic signature. The controller may perform the comparison of the acoustic signal with a plurality of reference acoustic signatures. Each reference acoustic signature may be related to a particular state of the fluid equipment as disclosed herein. The acoustic signature may comprise a unique profile or pattern that may be compared with a reference pattern of the reference acoustic signature.

The reference patterns may be compiled into a reference pattern library. The reference pattern library may be stored in the non-transitory machine-readable storage medium 151.

The controller 150 may determine a state of the fluid equipment, presence or absence of fluid, and/or a kind of fluid based on a probability of the output of the algorithm to satisfy a predetermined probability threshold. Depending on the matching degree between the acoustic signature and the reference acoustic signature a probability may be computed. Depending on the degree of coincidence or matching between the acoustic signature and the reference acoustic signature, a probability may be computed by the controller 150. The higher the match, the higher the probability.

Processing the acoustic signature for determining the state of a fluid equipment may comprise employing statistical processing and/or machine learning methods. The controller 150 may be configured to use supervised models to analyse or process the acoustic signature. Examples of supervised models may include a convolutional neural network (CNN), support vector networks machines (SVMs) and/or decision trees. For example, the controller 150 may be configured to use a convolutional neural network to analyse the acoustic signature.

Using deep learning models to analyse or process the acoustic signature may improve the accuracy and efficiency of the determination of the state of the fluid equipment.

The controller 150 may be configured to sample the acoustic signature with a first predetermined sampling frequency value. However, the controller 150 may be configured to sample the acoustic signature at a second predetermined sampling frequency value if two or more outputs of the algorithm satisfy the predetermined probability threshold. In the example of the predetermined probability threshold of 50%, if two or more outputs of the algorithm are equal or greater than 50%, then various valve position states could be determined. In order to avoid that, the controller may sample the acoustic signature at the second predetermined sampling frequency value. The second predetermined sampling frequency value is different from the first predetermined sampling frequency value.

Figure 4 schematically illustrates a view of a system 200 in a tank vehicle 400 according to one example of the present disclosure. The tank vehicle comprises a system 200 according to any of the examples disclosed herein and a fluid equipment 300 according to any of the examples disclosed herein. In the example of Figure 4, the fluid equipment 300 comprises a tank 310 in fluid communication with a pipe 320 and a valve 330. However, in some examples, the tank vehicle 400 may be voided of the controller 150 that may be installed in a control facility. The controller may be in data communication with tank vehicle 400 to perform all the operations described herein. Communication between the controller 150 and the acoustic transducer 220 has not been illustrated in Figure 4 for the sake of clarity.

In the example of Figure 4, the controller 150 is configured to process the acoustic signature, the tank fill level data, and vehicle state data using an algorithm configured to produce an output related to a valve position state from an output of the algorithm. The vehicle state data may comprise data related to an engine state and/or motion of the vehicle, and/or the positioning of the vehicle. For instance, an input of the algorithm may be related to the operation of the engine, and/or whether the vehicle is in motion or not, and/or the global positioning of the vehicle by any satellite positioning system. The engine and/or the motion may cause vibrations that may interfere with the received acoustic signature. Therefore, the state of the fluid equipment may be accurately determined regardless of state of the engine and/or the motion of the vehicle.

In some examples, depending on the vehicle state data, the controller may choose a particular predetermined frequency value to generate the acoustic signal. This way, a reliable state of the fluid equipment may be determined from the output of the algorithm.

In some examples, depending on the vehicle state data, the controller may choose a specific first or second predetermined sampling frequency value. This way, a reliable state of the fluid equipment may be determined from the output of the algorithm.

In some examples, the controller 150 may be configured to process the acoustic signature, the tank fill level data, the vehicle state data, and geometry tank data using an algorithm configured to produce an output related to a valve position state from an output of the algorithm. The geometry tank data may refer to a predetermined shape and/or volume of the tank. Data related to different shapes and/or volumes may be stored by the system, for instance by the non-transitory machine-readable storage medium 151 or may be provided to controller 150 through a user interface.

In the example of Figure 4, tank vehicle 400 comprises a tank 310 that comprises several compartments 311. The compartments 311 may be partitions. The tank fill level data may comprise compartment fill level data. Although the compartments 311 are shown as related to the example of tank vehicle 400, any of the herein disclosed examples of tanks may comprise a compartment and the tank fill level data comprise compartment fill level data. In some examples, the geometry tank data may refer to a compartment.

An alarm may be triggered by the controller 150 if it is determined or computed that the state of the valve 330 is open and the tank vehicle 400 is in motion. An alarm may be triggered by the controller 150 if it is determined or computed that the state of the valve 330 is open and the tank vehicle 400 is positioned out of an authorized location.

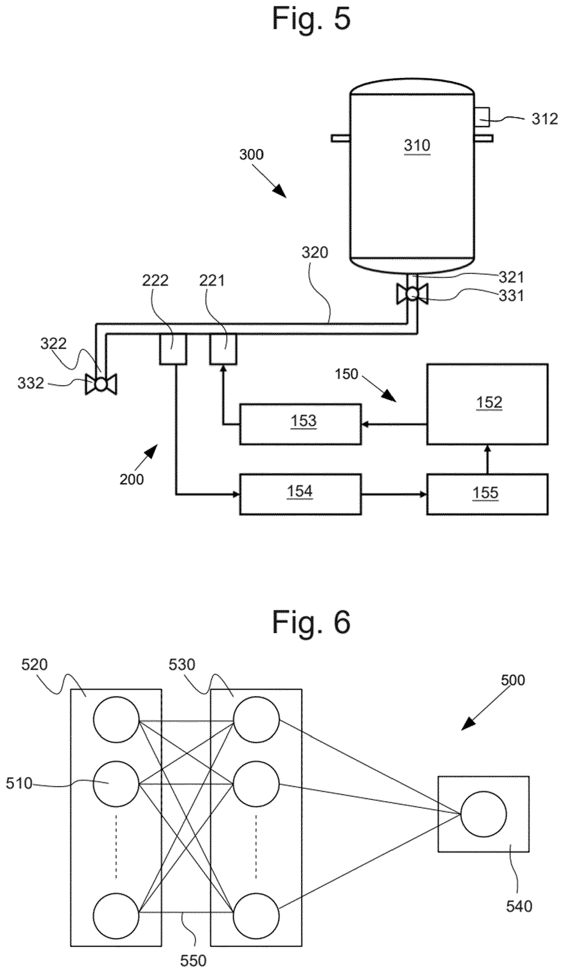

Figure 5 schematically illustrates a view of a system 200 according to one example of the present disclosure. The system 200 of Figure 5 is removably or releasably attached to the fluid equipment 300. In this example, the fluid equipment 300 comprises a bottom valve 331 between the tank 310 and a first end 321 of the pipe 320 and a filling/discharging valve 332 at a second end 322 of the pipe 320. The bottom valve 331 may be arranged at the bottom of the tank 310 or compartment, so that a flow of fluid leaving the tank or compartment may be regulated. The discharging valve 332 may be arranged in the pipe 320 downstream the bottom valve 331.

The controller 150 is configured to process the acoustic signature and the tank fill level data using the algorithm configured to produce an output related to a position of the bottom valve 331 and/or the filling/discharging valve 332. The example of Figure 5 may correspond to a fixed implementation such as a reservoir facility or a movable implementation such as a tank vehicle.

In the example of the fluid equipment 300 that comprises a bottom valve 331 and a filling/discharging valve 332, the controller 150 may be configured to determine at least one of the following states of the fluid equipment:
▪ open bottom valve and closed filling/discharging valve;
▪ open bottom valve and open filling/discharging valve;
▪ closed bottom valve and closed filling/discharging valve;
▪ open bottom valve and closed filling/discharging valve;
▪ closed bottom valve and closed filling/discharging valve.

In an example of the fluid equipment 300 that comprises a bottom valve 331 and a filling/discharging valve 332, and the controller 150 is configured to determine the presence or absence of fluid within the pipe, the controller 150 may be configured to determine at least one of the following states of the fluid equipment:
▪ open bottom valve and closed filling/discharging valve, and/or absence of fluid inside the pipe;
▪ open bottom valve and open filling/discharging valve, and/or absence of fluid inside the pipe;
▪ closed bottom valve and closed filling/discharging valve, and/or absence of fluid inside the pipe;
▪ open bottom valve and closed filling/discharging valve, and/or presence of fluid inside the pipe;
▪ closed bottom valve and closed filling/discharging valve, and/or presence of fluid inside the pipe.

Although the examples disclosed herein comprise one or two valves, the number of valves may vary depending on the case. The system and/or the methods disclosed herein may determine the state of the fluid equipment regardless of the number of valves.

In some examples, system 200 may comprise a tank fill level sensor 312 in data communication with controller 150. This way, the tank fill level data may be provided to controller 150. In a non-illustrated example, the tank fill level data may be provided to controller 150 through a user interface.

The acoustic transducer 220 of Figure 5 comprises an acoustic transmitter 221 and an acoustic receiver 222. The acoustic transmitter 221 and the acoustic receiver 222 may be integrally manufactured or may be installed separately from each other. In some examples, the acoustic transducer 220 may comprise a single pulse-echo transducer.

According to any of the examples disclosed herein, the controller 150 may comprise a computing unit 152, a pulse-generating unit 153, an amplifying/filtering unit 154, and a digital processing unit 155.

Although computing unit 152, pulse-generating unit 153, amplifying/filtering unit 154, and digital processing unit 155 have been illustrated in Figure 5 as separate units, at least two of them may be integrally manufactured.

The functions described herein related to computing unit 152, pulse-generating unit 153, amplifying/filtering unit 154, and digital processing unit 155 may be implemented by computing means, electronic means, or a combination thereof.

The computing unit 152 may be in data communication with the pulse-generating unit 153 to feed the acoustic transmitter 221 with a pulse which may be the acoustic signal. The computing unit 152 may choose the features of the pulse (acoustic signal) to be transmitted to the fluid equipment 300. The acoustic transmitter 221 that is acoustically coupled to the fluid equipment 300 may transmit the acoustic signal. The acoustic signature from the fluid equipment may be received by the acoustic receiver 222 or microphonic receiver. The acoustic signature received by the acoustic receiver 222 may be an analogue signal. The acoustic signature may be amplified and/or filtered by an amplifying/filtering unit 154. The amplified and/or filtered acoustic signature may be digitally processed by the digital processing unit 155. The digitally processed acoustic signature may reach the computing unit 152. The computing unit 152 may implement the algorithm to produce the output related to the valve state position, and may also determine the state of the fluid equipment based on the output.

The acoustic signature may be sampled by the digital processing unit 155. Sampling operation may be performed with the first predetermined sampling frequency value. The first predetermined sampling frequency value may vary depending on the case. In an example, the first predetermined sampling frequency value may be 100 kHz.

The digitally processed acoustic signature obtained from the sampling operation may be transformed into a frequency-domain signal. A Discrete Fourier Transform (DFT) may be applied to the frequency-domain signal. The transform may be performed by the digital processing unit 155.

In examples, the algorithm may comprise a neural network 500, such as an artificial neural network. The neural network may comprise a convolutional neural network.

Figure 6 is a flow chart schematically illustrating a neural network 500 according to an example of the present disclosure.

The neural network 500 of Figure 6 has been schematically illustrated. The number of nodes 510 shown is not limiting and may vary depending on the case.

In the example of Figure 6, the neural network 500 comprises an input layer 520, a hidden layer 530, and an output layer 540. Although three layers have been depicted, the number of layers of the neural network may vary depending on the case. For instance, the neural network 500 may include two or more hidden layers 530. The use of hidden layers may help to produce significantly accurate outputs that may encompass more scenarios than the set of training inputs.

The input layer 520 may receive the acoustic signature of the fluid equipment, for example, the Fourier-transformed sample or samples. The input layer 520 may also receive tank fill level data, for example, related to full, empty, and/or an intermediate option between full and empty. The number of inputs may vary depending on the case.

In some examples, the input layer 520 may receive the predetermined sampling frequency value. In one example, the input layer 520 may receive vehicle state data.

In an example, the number of nodes of the hidden layers 530 may be two times the number of nodes of the input layer 520.

In Figure 6 there are some connection lines 550 between nodes 510 of the different layers. The connection lines 550 are related to the weights between nodes. Weight may be a parameter that transforms input data within the network's hidden layers. Weight may be a filter or kernel of the neural network.

The inter-node weights' values may vary as the neural network 500 is trained.

The neural network 500 may process the input layer data using connection weights or inter-node weights.

The output layer 540 may provide at least one numerical value and/or text, associated with the input data. The numerical value and/or text may refer to a valve position state and/or a probability.

A deep learning or training algorithm may be used to train the neural network 500. A large amount of data may be considered to detect a state of the fluid equipment. The neural network may be trained with acoustic signatures related to different states of the fluid equipment. The controller 150 may be configured to train the neural network with a set of training acoustic signatures. Different training tank fill level data may be also provided to train the neural network 500.

In some examples, the controller 150 may perform a supervised training of a computer-implemented machine learning model, using the set of training acoustic signatures and a label indicating the state of the fluid equipment in each of the acoustic signature. The supervised training may further comprise, for each acoustic signature, setting an output parameter of the machine learning model corresponding to the probability of the determined state.

The training acoustic signatures may comprise acoustic signatures obtained, for instance from a condition as set forth below, or a combination of at least two of them:
- different positions of the acoustic transducer over the fluid equipment;
- different kinds of fluids;
- different tank fill level data;
- different number and location of valves;
- different state position of the valves;
- different predetermined sampling frequency values;
- different predetermined frequency values of the acoustic signal;
- different kinds of tank vehicles;
- different geometries of tanks;
- number of cycles of the acoustic signal; and/or
- acoustic signatures in time domain and/or frequency domain.

A backpropagation approach may be applied for training the neural network 500. The neural network 500 may be a feedforward neural network.

In some examples, the controller 150 is configured to process the acoustic signature using a trained neural network. The controller 150 may thus be configured to determine, using a trained neural network, the state of the fluid equipment. The determination of the state may be performed based on the output of the neural network 500.

When the algorithm comprises a neural network 500, and the system 200 comprises the bottom valve 331 and the filling/discharging valve 332, the controller 150 is configured to produce an output related to the bottom valve 331 and/or the filling/discharging valve 332 position state. The state may be determined from the output of the neural network.

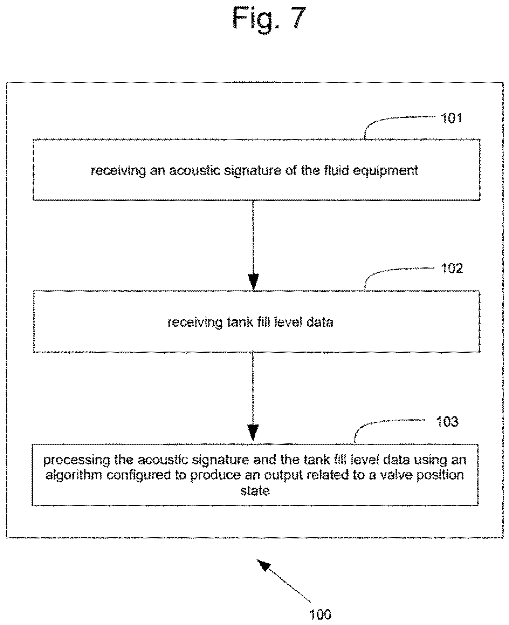

Figure 7 is a flow chart schematically illustrating a computer-implemented method 100 according to an example of the present disclosure. The method 100 for determining a state of a fluid equipment comprising a tank in fluid communication with a pipe and a valve comprises:
receiving, by a controller, an acoustic signature of the fluid equipment. This can be seen in block 101;
receiving, by the controller, tank fill level data. This can be seen in block 102;
processing, by the controller, the acoustic signature, and the tank fill level data using an algorithm configured to produce an output related to a valve position state. This can be seen in block 103.

The method 100 may be performed by a system 200 for determining a state of the fluid equipment according to any example herein disclosed.

Processing the acoustic signature may comprise determining, by the controller 150, the valve position state by verifying whether the output of the algorithm satisfies a predetermined probability threshold. In some examples, processing the acoustic signature may comprise determining, by the controller 150, the valve position state based on an output of the algorithm that has the highest probability value.

In the examples of the method 100 when the fluid equipment comprises a bottom valve between the tank and a first end of the pipe and a filling/discharging valve at a second end of the pipe, the algorithm is configured to determine the position of the bottom valve and the filling/discharging valve.

In some examples, the method 100 may comprise:
transmitting, by an acoustic transducer, an acoustic signal to the fluid equipment;
collecting, by the acoustic transducer, the acoustic signature of the fluid equipment;
providing the acoustic signature to the controller.

In the examples of the method 100 disclosed herein, the algorithm may comprise a neural network. In some examples, the neural network may comprise a convolutional neural network.

In an example, the neural network may be trained using training acoustic signatures with an associated classification label. The classification label may comprise a state of the fluid equipment.

In examples, the method 100 may comprise processing the acoustic signature and the tank fill level data using the algorithm configured to produce an output related to the bottom valve and the filling/discharging valve position state.

The method 100 may comprise commanding, by the controller, the acoustic transducer such that the acoustic signal comprises a predetermined frequency value.

The method 100 may comprise sampling, by the controller, the acoustic signature with a first predetermined sampling frequency value.

The method 100 may comprise sampling, by the controller, the acoustic signature with a second predetermined sampling frequency value if two or more outputs of the algorithm satisfy the predetermined probability threshold.

The method 100 may comprise determining, by the controller, presence or absence of fluid within the pipe from the output of the algorithm.

When the fluid equipment comprises a bottom valve between the tank and a first end of the pipe and a discharging valve at a second end of the pipe, the algorithm is configured to produce an output related to the bottom valve and the discharging valve position state.

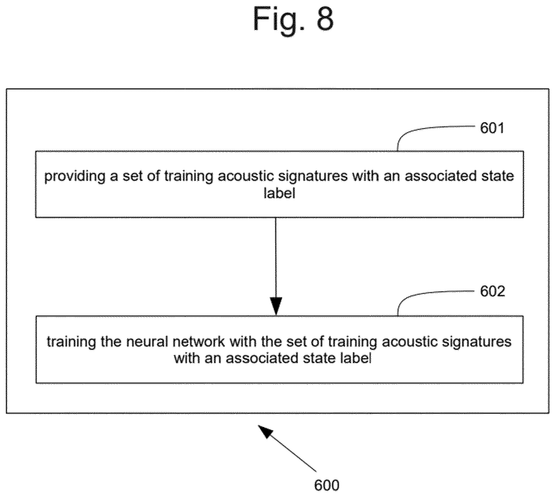

Figure 8 is a flow chart schematically illustrating a computer-implemented method 600 according to an example of the present disclosure. The method 600 of Figure 8 is related to a training method.

According to a further aspect, a method 600 for training the neural network 500 of the method for determining a state of a fluid equipment according to any of the examples disclosed herein, is disclosed. The method 600 for training comprises:
providing a set of training acoustic signatures with an associated state label, see block 601;
training the neural network with the set of training acoustic signatures with an associated state label, see block 602.

According to a yet further aspect, a controller 150 is disclosed, the controller may comprise a processor configured to perform the method for determining a state of a fluid equipment according to any example disclosed herein.

According to a yet further aspect, a computer program is disclosed. The computer program may comprise instructions, which, when the program is executed by a controller 150, cause the controller 150 to carry out the method for determining a state of a fluid equipment according to any example disclosed herein.

The machine-readable instructions may be carried in a storage medium or may be carried in a transmissible carrier such as an electrical or optical signal, which may be conveyed via electrical or optical cable or by radio or other means.

The memory may store:
- a database of reference acoustic signatures, wherein each of the acoustic signatures may correspond to a different state of the fluid equipment, presence or absence of fluid, and/or a kind of fluid;

According to a further aspect, a computer-implemented method is disclosed. The computer-implemented method may comprise:
receiving an acoustic signature of a fluid equipment comprising a tank in fluid communication with a pipe and a valve;
receiving tank fill level data;
processing the acoustic signature, and the tank fill level data using an algorithm configured to produce an output related to a valve position state, and determining the valve position state by verifying whether the output of the algorithm satisfies a predetermined probability threshold.

A method for training a neural network of a method for determining a state of a fluid equipment according to any of the examples disclosed herein, may comprise:
providing a set of training acoustic signatures with an associated state label;
training the neural network with the set of training acoustic signatures with an associated state label.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A system (200) for determining a state of a fluid equipment (300) comprising a tank (310) in fluid communication with a pipe (320) and a valve (330), wherein the system comprises a controller (150) configured to:
receive an acoustic signature of the fluid equipment;
receive tank fill level data;
process the acoustic signature and the tank fill level data using an algorithm configured to produce an output related to a valve position state;
determine the valve position state by verifying whether the output of the algorithm satisfies a predetermined probability threshold.

2. The system (200) according to claim 1, comprising:
an acoustic transducer (220) to be acoustically coupled to the fluid equipment (300), wherein the acoustic transducer is configured to transmit an acoustic signal to the fluid equipment and to collect the acoustic signature of the fluid equipment;
wherein the acoustic transducer is in data communication with the controller (150).

3. The system (200) according to any of claims 1 - 2, wherein the algorithm comprises a neural network (500).

4. The system (200) according to any of claims 1 - 3, wherein the controller (150) is configured to sample the acoustic signature with a first predetermined sampling frequency value.

5. The system (200) according to claim 4, wherein the controller (150) is configured to sample the acoustic signature with a second predetermined sampling frequency value if two or more outputs of the algorithm satisfy the predetermined probability threshold.

6. The system (200) according to any of claims 1 - 5, wherein the controller (150) is configured to determine presence or absence of fluid within the pipe (320) from the output of the algorithm.

7. The system (200) according to any of claims 1 - 6, wherein the fluid equipment comprises a bottom valve (331) and a discharging valve (332), the bottom valve being arranged between the tank (310) and the pipe (320) and the discharging valve being arranged downstream the bottom valve, the controller (150) being configured to process the acoustic signature and the tank fill level data using the algorithm to produce an output related to a bottom valve and a discharging valve position state.

8. The system (200) according to claims 7 and 3, wherein the controller (150) is configured to determine the bottom valve and the discharging valve position state from the output of the neural network.

9. A tank vehicle (400) comprising the system (200) according to any of claims 1 - 8 and a fluid equipment (300) comprising a tank in fluid communication with a pipe and a valve.

10. The tank vehicle (400) according to claim 9, wherein the controller is configured to process the acoustic signature, the tank fill level data, and vehicle state data using the algorithm configured to produce an output related to a valve position state.

11. The tank vehicle (400) according to claim 10, wherein the vehicle state data comprises data related to an engine state, and/or motion, and/or positioning of the tank vehicle.

12. A method (100) for determining a state of a fluid equipment comprising a tank in fluid communication with a pipe and a valve, wherein the method comprises:
receiving (101), by a controller, an acoustic signature of the fluid equipment;
receiving (102), by the controller, tank fill level data;
processing (103), by the controller, the acoustic signature, and the tank fill level data using an algorithm configured to produce an output related to a valve position state;
determining, by the controller, the valve position state by verifying whether the output of the algorithm satisfies a predetermined probability threshold.

13. The method (100) according to claim 12, comprising:
transmitting, by an acoustic transducer, an acoustic signal to the fluid equipment;
collecting, by the acoustic transducer, the acoustic signature of the fluid equipment;
providing the acoustic signature to the controller.

14. The method (100) according to any of claims 12 - 13, wherein the algorithm comprises a neural network (500), the neural network being trained using training acoustic signatures with an associated state label.

## Patentansprüche

1. Ein System (200) zum Bestimmen eines Zustands einer Fluidausrüstung (300), umfassend einen Tank (310) in Fluidverbindung mit einer Leitung (320) und einem Ventil (330), wobei das System eine Steuerung (150) umfasst, die dazu konfiguriert ist:
eine akustische Signatur der Fluidausrüstung zu empfangen;
Tankfüllstandsdaten zu empfangen;
die akustischen Signatur und die Tankfüllstandsdaten unter Verwendung eines Algorithmus zu verarbeiten, der dazu konfiguriert ist, eine Ausgabe in Bezug auf einen Ventilpositionszustand zu erzeugen;
den Ventilpositionszustand zu bestimmen, indem überprüft wird, ob die Ausgabe des Algorithmus einen vorbestimmten Wahrscheinlichkeitsschwellenwert erfüllt.

2. Das System (200) nach Anspruch 1, umfassend:
einen Schalwandler (220), der akustisch an die Fluidausrüstung (300) zu koppeln ist, wobei der Schalwandler dazu konfiguriert ist, ein akustisches Signal an die Fluidausrüstung zu übertragen und die akustische Signatur der Fluidausrüstung zu sammeln;
wobei der Schallwandler in Datenkommunikation mit der Steuerung (150) steht.

3. Das System (200) nach einem der Ansprüche 1 bis 2, wobei der Algorithmus ein neuronales Netzwerk (500) umfasst.

4. Das System (200) nach einem der Ansprüche 1 bis 3, wobei die Steuerung (150) dazu konfiguriert ist, die akustische Signatur mit einem ersten vorbestimmten Abtastfrequenzwert abzutasten.

5. Das System (200) nach Anspruch 4, wobei die Steuerung (150) dazu konfiguriert ist, die akustische Signatur mit einem zweiten vorbestimmten Abtastfrequenzwert abzutasten, wenn zwei oder mehr Ausgaben des Algorithmus den vorbestimmten Wahrscheinlichkeitsschwellenwert erfüllen.

6. Das System (200) nach einem der Ansprüche 1 bis 5, wobei die Steuerung (150) dazu konfiguriert ist, das Vorhandensein oder das Nichtvorhandensein von Fluid in der Leitung (320) ausgehend von der Ausgabe des Algorithmus zu bestimmen.

7. Das System (200) nach einem der Ansprüche 1 bis 6, wobei die Fluidausrüstung ein Bodenventil (331) und ein Auslassventil (332) umfasst, wobei das Bodenventil zwischen dem Tank (310) und der Leitung (320) angeordnet ist und das Auslassventil stromabwärts des Bodenventils angeordnet ist, wobei die Steuerung (150) dazu konfiguriert ist, die akustische Signatur und die Tankfüllstandsdaten unter Verwendung des Algorithmus zu verarbeiten, um eine Ausgabe in Bezug auf ein Bodenventil und einen Auslassventilpositionszustand zu erzeugen.

8. Das System (200) nach den Ansprüchen 7 und 3, wobei die Steuerung (150) dazu konfiguriert ist, den Positionszustand des Bodenventils und des Auslassventils ausgehend von der Ausgabe des neuronalen Netzwerks zu bestimmen.

9. Ein Tankfahrzeug (400) umfassend das System (200) nach einem der Ansprüche 1 bis 8 und eine Fluidausrüstung (300), die einen Tank in Fluidverbindung mit einer Leitung und einem Ventil umfasst.

10. Das Tankfahrzeug (400) nach Anspruch 9, wobei die Steuerung dazu konfiguriert ist, die akustische Signatur, die Tankfüllstandsdaten und die Fahrzeugzustandsdaten unter Verwendung des Algorithmus zu verarbeiten, der dazu konfiguriert ist, eine Ausgabe in Bezug auf einen Ventilpositionszustand zu erzeugen.

11. Das Tankfahrzeug (400) nach Anspruch 10, wobei die Fahrzeugzustandsdaten Daten umfassen, die sich auf einen Motorzustand und/oder eine Bewegung und/oder eine Positionierung des Tankfahrzeugs beziehen.

12. Ein Verfahren (100) zum Bestimmen eines Zustands einer Fluidausrüstung umfassend einen Tank in Fluidverbindung mit einer Leitung und einem Ventil, wobei das Verfahren Folgendes umfasst:
empfangen (101) einer akustischen Signatur der Fluidausrüstung durch eine Steuerung;
empfangen (102) von Tankfüllstandsdaten durch die Steuerung;
verarbeiten (103) der akustischen Signatur und der Tankfüllstandsdaten durch die Steuerung unter Verwendung eines Algorithmus, der dazu konfiguriert ist, eine Ausgabe in Bezug auf einen Ventilpositionszustand zu erzeugen;
bestimmen des Ventilpositionszustands durch Verifizieren, ob die Ausgabe des Algorithmus einen vorbestimmten Wahrscheinlichkeitsschwellenwert erfüllt, durch die Steuerung.

13. Das Verfahren (100) nach Anspruch 12, umfassend:
übertragen eines akustischen Signals an die Fluidausrüstung durch einen Schalwandler;
sammeln der akustischen Signatur der Fluidausrüstung durch den Schalwandler;
bereitstellen der akustischen Signatur an die Steuerung.

14. Das Verfahren (100) nach einem der Ansprüche 12 bis 13, wobei der Algorithmus ein neuronales Netzwerk (500) umfasst, wobei das neuronale Netzwerk unter Verwendung von akustischen Trainingssignaturen mit einem zugeordneten Zustandsetikett trainiert worden ist.

## Revendications

1. Un système (200) pour déterminer un état d'un équipement de fluide (300) comprenant un réservoir (310) en communication de fluide avec un tuyau (320) et une vanne (330), dans lequel le système comprend un contrôleur (150) configuré pour :
recevoir une signature acoustique de l'équipement de fluide ;
recevoir les données de niveau de remplissage du réservoir ;
traiter la signature acoustique et les données de niveau de remplissage du réservoir en utilisant un algorithme configuré pour produire une sortie liée à un état de position de vanne ;
déterminer l'état de la position de vanne en vérifiant si la sortie de l'algorithme satisfait un seuil de probabilité prédéterminé.

2. Le système (200) selon la revendication 1, comprenant :
un transducteur acoustique (220) destiné à être couplé acoustiquement à l'équipement de fluide (300), dans lequel le transducteur acoustique est configuré pour transmettre un signal acoustique à l'équipement de fluide et pour collecter la signature acoustique de l'équipement de fluide ;
dans lequel le transducteur acoustique est en communication de données avec le contrôleur (150).

3. Le système (200) selon l'une quelconque des revendications 1 à 2, dans lequel l'algorithme comprend un réseau neuronal (500).

4. Le système (200) selon l'une quelconque des revendications 1 à 3, dans lequel le contrôleur (150) est configuré pour échantillonner la signature acoustique avec une première valeur de fréquence d'échantillonnage prédéterminée.

5. Le système (200) selon la revendication 4, dans lequel le contrôleur (150) est configuré pour échantillonner la signature acoustique avec une seconde valeur de fréquence d'échantillonnage prédéterminée si deux ou plusieurs sorties de l'algorithme satisfont le seuil de probabilité prédéterminé.

6. Le système (200) selon l'une quelconque des revendications 1 à 5, dans lequel le contrôleur (150) est configuré pour déterminer la présence ou l'absence de fluide à l'intérieur du tuyau (320) à partir de la sortie de l'algorithme.

7. Le système (200) selon l'une quelconque des revendications 1 à 6, dans lequel l'équipement de fluide comprend une vanne de fond (331) et une vanne de décharge (332), la vanne de fond étant agencée entre le réservoir (310) et le tuyau (320) et la vanne de décharge étant agencée en aval de la vanne de fond, le contrôleur (150) étant configuré pour traiter la signature acoustique et les données de niveau de remplissage du réservoir en utilisant l'algorithme pour produire une sortie liée à une vanne de fond et à un état de position de vanne de décharge.

8. Le système (200) selon les revendications 7 et 3, dans lequel le contrôleur (150) est configuré pour déterminer l'état de position de la vanne de fond et de la vanne de décharge à partir de la sortie du réseau neuronal.

9. Un véhicule-citerne (400) comprenant le système (200) selon l'une quelconque des revendications 1 à 8 et un équipement de fluide (300) comprenant un réservoir en communication de fluide avec un tuyau et une vanne.

10. Le véhicule-citerne (400) selon la revendication 9, dans lequel le contrôleur est configuré pour traiter la signature acoustique, les données de niveau de remplissage du réservoir et les données d'état du véhicule en utilisant l'algorithme configuré pour produire une sortie liée à un état de position de vanne.

11. Le véhicule-citerne (400) selon la revendication 10, dans lequel les données d'état du véhicule comprennent des données relatives à un état du moteur, et/ou un mouvement, et/ou un positionnement du véhicule-citerne.

12. Un procédé (100) de détermination d'un état d'un équipement de fluide comprenant un réservoir en communication de fluide avec un tuyau et une vanne, dans lequel le procédé comprend :
recevoir (101), par un contrôleur, une signature acoustique de l'équipement de fluide ;
recevoir (102), par le contrôleur, des données de niveau de remplissage du réservoir ;
traiter (103), par le contrôleur, la signature acoustique et les données de niveau de remplissage du réservoir à l'aide d'un algorithme configuré pour produire une sortie liée à un état de position de vanne ;
déterminer, par le contrôleur, l'état de la position de vanne en vérifiant si la sortie de l'algorithme satisfait un seuil de probabilité prédéterminé.

13. Le procédé (100) selon la revendication 12, comprenant :
transmettre, par un transducteur acoustique, un signal acoustique à l'équipement de fluide ;
collecter, par le transducteur acoustique, la signature acoustique de l'équipement de fluide ;
fournir la signature acoustique au contrôleur.

14. Le procédé (100) selon l'une quelconque des revendications 12 à 13, dans lequel l'algorithme comprend un réseau neuronal (500), le réseau neuronal étant entraîné à l'aide de signatures acoustiques d'entraînement avec une étiquette d'état associée.
